Europäisches Patentamt

European Patent Office

Office européen des brevets

(11) Veröffentlichungsnummer: **0 349 986**
**A2**

## (12) EUROPÄISCHE PATENTANMELDUNG

(21) Anmeldenummer: 89112213.7

(22) Anmeldetag: 04.07.89

(51) Int. Cl.⁴: **B62M 3/08**

(30) Priorität: 05.07.88 DE 3822663

(43) Veröffentlichungstag der Anmeldung:
10.01.90 Patentblatt 90/02

(84) Benannte Vertragsstaaten:
DE FR GB IT SE

(71) Anmelder: **Fichtel & Sachs AG**
**Ernst-Sachs-Strasse 62**
**D-8720 Schweinfurt(DE)**

(72) Erfinder: **v.d. Osten-Sacken, Ernst, Prof. Dr.**
**Ing.**
**Grünepleistrasse 37**
**D-5106 Roetgen(DE)**
Erfinder: **Schuchard, Klaus, Dr. Ing.**
**Domaine de Harancourt**
**F-76260 Ponts et Marais(FR)**

(74) Vertreter: **Liska, Horst, Dr. et al**
**Patentanwälte H. Weickmann, Dr. K. Fincke,**
**F.A. Weickmann, B. Huber, Dr. H. Liska, Dr. J.**
**Prechtel Möhlstrasse 22 Postfach 86 08 20**
**D-8000 München 86(DE)**

(54) **Pedal-Bindung.**

(57) Die Pedalbindung erlaubt lösbares Kuppeln eines Schuhs mit einem um eine Pedal-Drehachse drehbaren Pedal eines Fahrrads und umfaßt ein pedalseitiges Kupplungsteil (3), welches eine Trittfläche (15) bildet und ein auf die Trittfläche (15) aufsetzbares schuhseitiges Kupplungsteil (5). Die Kupplungsteile (3, 5) sind über Rastorgane (33) lösbar miteinander verriegelt, die an einander zugewandten Flächen von Gabelschenkeln (29) des pedalseitigen Kupplungsteils (3) einerseits und Gabelschenkeln (27) des schuhseitigen Kupplungsteils (5) andererseits angeordnet sind. Eine derartige Rastverbindung ist einfach und betriebssicher. Einander zugeordnete Schrägschubflächenpaarungen (45, 47 bzw. 51, 53) der Kupplungsteile (3, 5) unterstützen das Lösen der Riegelverbindung bei Relativkippbewegungen der beiden Kupplungsteile (3, 5).

FIG.1

## Pedal-Bindung

Die Erfindung betrifft eine Pedal-Bindung zum lösbaren Kuppeln eines Schuhs mit einem um eine Pedalachse drehbaren Pedal eines Fahrrads.

Für höhere Leistungen beim Sport- und Rennradfahren muß der Schuh des Fahrers über eine Pedal-Bindung fest am Pedal gehalten werden, so daß nicht nur Druckkräfte auf das Pedal übertragen werden können, sondern auch Zugkräfte. Herkömmliche, auf Druck und Zug beanspruchbare Pedal-Bindungen haben einen fest mit dem Pedal verbundenen Bügel, den der Fahrer mit seiner Schuhspitze von hinten her untergreift und einen etwa über den Rist verlaufenden Riemen. Der Riemen umspannt den Schuh vergleichsweise straff, mit der Folge, daß der Fuß bei einem Sturz nicht rasch genug aus der Bindung gelöst werden kann und sich der Fahrer bei dem Sturz vielfach schwer verletzt.

Aus der europäischen Patentanmeldung 155 114 ist eine Pedal-Bindung mit zwei miteinander verrastbaren Kupplungsteilen bekannt, die nicht nur Druckkräfte, sondern innerhalb definierter Grenzen auch Zugkräfte übertragen kann. Durch Verdrehen, Kippen oder übermäßige Zugbeanspruchung des schuhseitigen Kupplungsteils relativ zum pedalseitigen Kupplungsteil, können die Kupplungsteile voneinander gelöst werden. Eine Bindung dieser Art mindert die Gefahr eines Sturzes mit am Pedal festgehaltenem Fuß.

Bei der aus der europäischen Patentanmeldung 155 114 bekannten Pedal-Bindung ist das eine Trittfläche bildende Pedal mit einem in Richtung der Pedal-Drehachse sich erstreckenden Riegelteil versehen, welches an seinen in Richtung der Pedal-Drehachse sich gegenüberliegenden Stirnseiten federnde Rastzapfen trägt. In der Schuhsohle oder einem mit dem Schuh verbundenen Kupplungsteil ist eine komplementäre Aussparung vorgesehen, in die der Riegelteil bei auf das Pedal aufgesetztem Schuh eingreift. In den in Richtung der Pedal-Drehachse sich gegenüberliegenden Seitenflächen der Aussparung sind Rastöffnungen vorgesehen, in die die Rastzapfen bei auf das Pedal aufgesetztem Schuh eingreifen und den Schuh am Pedal verrasten. Die Aussparung erweitert sich zur Schuhspitze hin trichterförmig, um das Einführen des Riegelteils in die Aussparung zu erleichtern.

Bei der aus der europäischen Patentanmeldung 155 114 bekannten Pedal-Bindung sind die Rastzapfen des pedalseitigen Riegelteils in Bohrungen des Riegelteils geführt und durch Schraubendruckfedern nach außen vorgespannt. Eine solche Konstruktion ist vergleichsweise aufwendig und störanfällig, da sich die Gleitführungen der Riegelzapfen in den Bohrungen beispielsweise durch Verschmutzen festsetzen können. Lockern oder Verklemmen der Riegelzapfen ändert aber in jedem Fall die Auslöseeigenschaft der Pedal-Bindung, was unerwünscht ist.

Eine weitere, aus zwei Kupplungsteilen bestehende Pedal-Bindung ist aus dem europäischen Patent 146 454 bekannt. Bei dieser Pedal-Bindung sind an dem pedalseitigen Kupplungsteil in Fahrtrichtung vor und hinter der Pedal-Drehachse Haken angebracht, die zugeordnete Laschen des schuhseitigen Kupplungsteils übergreifen. Der in Fahrtrichtung hintere Haken wird von einer Feder in Fahrtrichtung auf das schuhseitige Kupplungsteil zu vorgespannt. Eine solche Pedalbindung ermöglicht zwar die Übertragung von Zugkräften und gibt den Schuh bei einer Drehung um die Schienbeinachse frei, wird aber nicht gelöst, wenn der Fuß um seine Fußlängsachse gekippt wird.

Es ist Aufgabe der Erfindung, eine einfache und betriebssichere Pedal-Bindung zu schaffen, deren Kupplungsteile bei Überbeanspruchung der Rastverbindungen durch im wesentlichen beliebige Zug- oder Drehbewegungen voneinander gelöst werden können.

Die erfindungsgemäße Pedal-Bindung geht von der aus der europäischen Patentanmeldung 155 114 bekannten Art aus und umfaßt entsprechend dieser Pedal-Bindung ein pedalseitiges Kupplungsteil, welches eine Trittfläche bildet und ein auf die Trittfläche aufsetzbares schuhseitiges Kupplungsteil. Ein erstes der beiden Kupplungsteile weist eine quer zur Trittfläche offene Aussparung auf, die an zwei in Richtung der Pedal-Drehachse sich gegenüberliegenden Seitenflächen mit Rastorganen versehen ist. Ein zweites der beiden Kupplungsteile umfaßt ein in die Aussparung einsetzbares Riegelteil, welches an den Rastorganen des ersten Kupplungsteils elastisch verrastbare, komplementäre Rastorgane trägt. Eine wesentliche Vereinfachung und Erhöhung der Betriebssicherheit der Pedal-Bindung wird erreicht, wenn erfindungsgemäß eines der beiden Kupplungsteile gabelförmig quer zur Pedal-Drehachse frei abstehende, in Richtung der Pedal-Drehachse elastisch auslenkbare Gabelschenkel aufweist, die im Bereich ihrer freien Enden die Rastorgane tragen. Die Gabelschenkel werden damit nicht nur zur Halterung und Führung der Rastorgane ausgenutzt, sondern sorgen aufgrund ihrer Eigenelastizität für definierte, im Gebrauch sich auch bei Verschmutzung nicht ändernde Federeigenschaften.

In einer bevorzugten Ausgestaltung der Erfindung haben beide Kupplungsteile gabelförmig quer zur Pedalachse frei abstehende Gabelschenkel, von denen die Gabelschenkel eines ersten Kupplungsteils eine Aussparung zwischen sich begrenzen, in die die Gabelschenkel des zweiten Kupplungsteils entgegengerichtet hinein abstehen. Unabhängig davon, welches der beiden Kupplungsteile pedalseitig vorgesehen ist, ist damit auch am Pedal eine in Trittrichtung durchgängig offene Aussparung vorhanden, so daß sich die Gefahr einer Verschmutzung der ineinandergreifenden Rastorgane mindert. Dies gilt insbesondere dann, wenn die Gabelschenkel des schuhseitigen Kupplungsteils zwischen die Gabelschenkel des pedalseitigen Kupplungsteils greifen.

Die zum Lösen der Rastverbindung erforderlichen Anfangskräfte werden nicht nur durch die Federeigenschaften der elastischen Gabelschenkel bestimmt, sondern auch durch die Form der zueinander komplementären Rastorgane. In einer geeigneten Gestaltung sind kugelkalottenförmigen Rastorganen des einen Kupplungsteils konische Aussparungen des anderen Kupplungsteils zugeordnet. Die Rastverbindung muß allerdings mehreren Forderungen genügen. Sie muß einerseits ausreichend hohe Zugkräfte übertragen können, andererseits aber doch so leichtgängig sein, daß sie im Gefahrenfall durch eine mehr oder weniger beliebige Drehbewegung des Fußes gelöst werden kann. In einer bevorzugten Ausgestaltung ist deshalb vorgesehen, daß an den beiden Kupplungsteilen bei miteinander verrasteten Rastorganen einander benachbarte Schrägschubflächen angeformt sind, die bei Relativdrehung der beiden Kupplungsteile um eine quer zur Pedal-Drehachse verlaufende Relativdrehachse die Verrastung der Rastorgane lösen. Dies hat den Vorteil, daß die zum Lösen der Rastverbindung führende Relativdrehbewegung der beiden Kupplungsteile durch eine von den Schräg schubflächen bewirkte Schubbewegung unterstützt und der Auslösevorgang im Gefahrenfall erleichtert wird.

Es hat sich für die optimale Übertragung von Zugkräften als zweckmäßig herausgestellt, wenn die beiden Kupplungsteile sowohl in Fahrtrichtung vor der Pedal-Drehachse als auch hinter der Pedal-Drehachse miteinander verbunden sind. In einer bevorzugten Ausgestaltung sind die Rastorgane in Fahrtrichtung hinter der Pedal-Drehachse angeordnet, während in Fahrtrichtung vor der Pedalachse an dem pedalseitigen Kupplungsteil ein entgegen der Fahrtrichtung offener Haken vorgesehen ist, der eine zum Haken abstehende Lasche des schuhseitigen Kupplungsteils übergreift. Die genannten Schrägschubflächen sind zweckmäßigerweise an dem Haken und der Lasche angeformt und verschieben die Kupplungsteile bei der Relativdrehung relativ zueinander in Fahrtrichtung. Die Schrägflächen des Hakens und der Lasche erleichtern auch das Lösen der Haken-Lasche-Verbindung im Gefahrenfall.

Zusätzlich oder alternativ zu den Schrägschubflächen der Haken-Lasche-Verbindung können auch weitere Schrägschubflächenpaarungen im Bereich der das Riegelteil aufnehmenden Aussparung vorgesehen sein. In einer zweckmäßigen Ausgestaltung, bei der das pedalseitige Kupplungsteil gabelförmig entgegen der Fahrtrichtung quer zur Pedal-Drehachse frei abstehende Gabelschenkel aufweist, die zwischen sich in Fahrtrichtung quer zur Pedal-Drehachse frei abstehende Gabelschenkel des schuhseitigen Kupplungsteils aufnehmen, können die Schrägschubflächen zwischen den Gabelschenkeln des pedalseitigen Kupplungsteils und an den Enden der Gabelschenkel des schuhseitigen Kupplungsteils vorgesehen sein. Bei einer Relativdrehung der Kupplungsteile um eine zur Trittfläche quer verlaufende Relativdrehachse wird das schuhseitige Kupplungsteil nach oben gezwängt, was den Lösevorgang der Rastverbindung erleichtert.

Die vorstehend erwähnte Haken-Lasche-Verbindung soll das Lösen der Rastverbindung bei einer Drehung des schuhseitigen Kupplungsteils um die Schienbeinachse möglichst nicht beeinträchtigen. In einer bevorzugten Ausgestaltung ist deshalb vorgesehen, daß der Haken in Richtung auf die Trittfläche gesehen Winkelform hat, deren Winkelschenkel im wesentlichen tangential zu den Drehkreisen der Lasche, um von den Rastorganen definierte Schwenkachsen verlaufen. Die Winkelform des Hakens erleichtert das Schließen der Rastverbindung, da sie die Lasche des schuhseitigen Kupplungsteils mittig zum pedalseitigen Kupplungsteil zentriert. Das Einführen der Lasche unter den Haken wird beträchtlich erleichtert, wenn das pedalseitige Kupplungsteil im Bereich des Hakens eine zur Aufnahme der Lasche geeignete Öffnung hat. Die Öffnung hat zweckmäßigerweise zum Haken hin Keilform und führt die Lasche zwangsweise unter den Haken hinein.

Die das Rastelement des zweiten Kupplungsteils aufnehmende Aussparung des ersten Kupplungsteils hat zweckmäßigerweise im wesentlichen entlang ihrer gesamten Berandung zum zweiten Kupplungsteil hin die Aussparung erweiternde Einführschrägflächen. Die Einführschrägflächen erleichtern das Zentrieren der Kupplungsteile relativ zueinander beim Schließen der Rastverbindung. Soweit beide Kupplungsteile mit aufeinander zu gerichteten Gabelschenkeln versehen sind, können die Enden der Gabelschenkel ebenfalls mit zueinander komplementären Schrägflächen versehen sein, die in Fahrtrichtung schräg von unten nach oben verlaufen und verhindern, daß sich die Gabelschenkel unbeabsichtigt verhaken.

Die Gabelschenkel, die die Federung der Rastorgane bewirken, können einteilig an dem Kupplungsteil angeformt sein. In einer bevorzugten Ausgestaltung sind sie jedoch einteilig an einem Stegabschnitt eines im wesentlichen U-förmigen Rastelements angeformt, welches im Bereich des Stegabschnitts an einem Basisteil des Kupplungsteils gehalten ist. Das Basisteil und das Kupplungsteil kann damit aus unterschiedlichen Materialien bestehen, wobei sich faserverstärkte Kunststoffwerkstoffe, insbesondere für das Rastelement, als besonders geeignet herausgestellt haben und darüberhinaus kann das Rastelement auch ausgetauscht werden, beispielsweise um seine Federhärte zu ändern.

Die Federkraft des Rastelements bestimmt die Zugbelastbarkeit der Pedalbindung und ist zweckmäßigerweise justierbar, um sie der jeweiligen Gebrauchssituation anpassen zu können. Die Federkraft läßt sich auf einfache Weise ändern, ohne das Rastelement von dem Basisteil abnehmen zu müssen, wenn der Stegabschnitt des Rastelements im Bereich der zu ihm benachbarten Enden der Gabelschenkel mittels zweier Gelenke an dem Basisteil gelagert ist und zwischen den beiden Gelenken ein in Richtung der Gabelschenkel verstellbarer Anschlag vorgesehen ist, über den der Stegabschnitt an dem Basisteil abgestützt ist. Durch Justieren des Anschlags läßt sich die Winkelstellung der Gabelschenkel relativ zueinander und damit deren Federweg justieren. Bei dem Anschlag kann es sich beispielsweise um eine in den Stegabschnitt oder das Basisteil geschraubte Stellschraube handeln. Eine stufenweise einfache Justierung erlaubt eine an dem Basisteil gelagert, als Anschlag dienende Stufenexzenterscheibe.

Im folgenden wird die Erfindung anhand einer Zeichnung näher erläutert. Hierbei zeigt:

Fig. 1 einen senkrecht zur Pedal-Drehachse verlaufenden Längsschnitt durch eine Pedalbindung eines Fahrrads;

Fig. 2 eine teilweise aufgebrochene Draufsicht auf ein pedalseitiges erstes Kupplungsteil der Pedal-Bindung nach Fig. 1;

Fig. 3 eine Schnittansicht durch das erste Kupplungsteil, gesehen entlang einer Linie III-III in Fig. 2;

Fig. 4 eine Schnittansicht durch das erste Kupplungsteil, gesehen entlang einer Linie IV-IV in Fig. 2, die mit der Schnittebene der Fig. 1 übereinstimmt;

Fig. 5 eine Unteransicht eines schuhseitigen, zweiten Kupplungsteils der Pedal-Bindung aus Fig. 1;

Fig. 6 eine teilweise Unteransicht einer Variante eines schuhseitigen zweiten Kupplungsteils, für die Verwendung in einer Pedalbindung gemäß Fig. 1;

Fig. 7 eine Schnittansicht durch das zweite Kupplungsteil, gesehen entlang einer Linie VII-VII in Fig. 6 und

Fig. 8 und 9 schematische Darstellungen von Varianten der Pedal-Bindung aus Fig. 1.

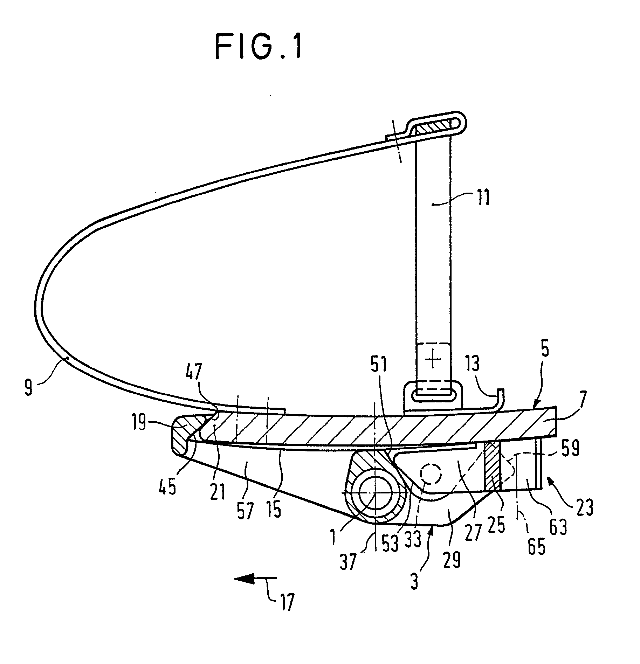

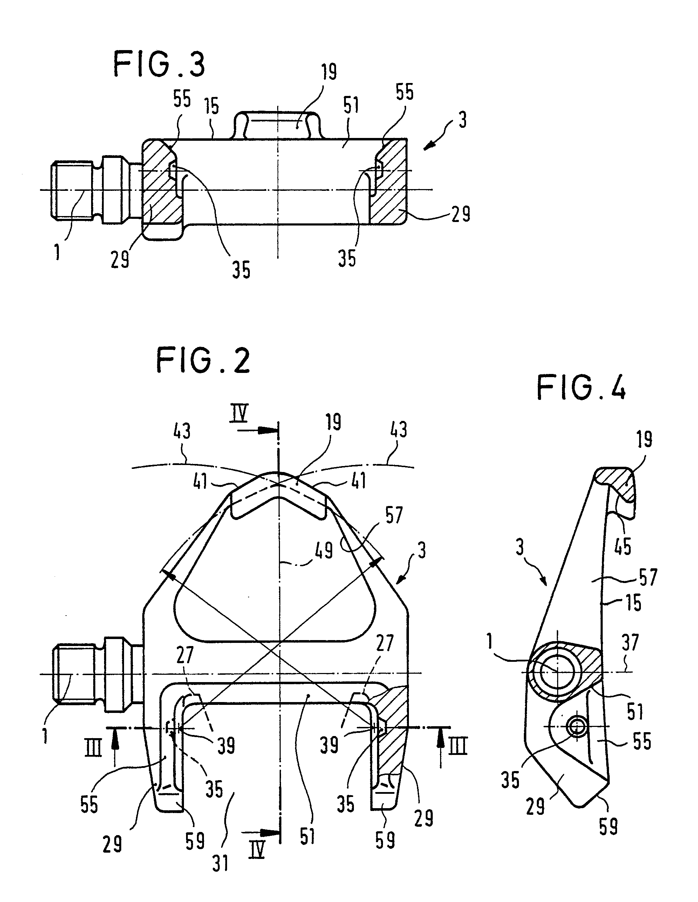

Die in Figur 1 in Zusammenstellung und in den Figuren 2 bis 5 in ihren Komponenten dargestellte Pedal-Bindung eines Fahrrads umfaßt ein pedalseitiges, um eine Pedal-Drehachse 1 drehbares erstes Kupplungsteil 3, an dem in nachstehend noch näher erläuterter Weise ein schuhseitiges zweites Kupplungsteil 5 lösbar verrastet ist. Das Kupplungsteil 5 trägt an einer Basisplatte 7 einen herkömmlichen Fußhaken 9 der die Schuhspitze umgreift und zusammen mit einem Riemen 11 und einem parallel zur Pedal-Drehachse 1 verlaufenden Steg 13 in herkömmlicher Weise den Schuh relativ zum Basisteil 7 fixiert.

Das pedalseitige Kupplungsteil 3 bildet auf seiner Oberseite eine Trittfläche 15, auf der das Basisteil 7 für die Übertragung von Druckkräften aufliegt. Auf der in Fig. 1 durch einen Pfeil 17 angedeuteten Fahrtrichtung vorn liegenden Seite der Pedal-Drehachse 1 ist das pedalseitige Kupplungsteil 3 mit einem entgegen der Fahrtrichtung offenen Haken 19 versehen, der eine am vorderen Ende des Basisteils 7 angeformte Lasche 21 übergreift. In Fahrtrichtung hinter der Pedal-Drehachse 1 ist an dem Basisteil 7 des schuhseitigen Kupplungsteils 5 ein im wesentlichen U-förmiges Rastelement 23 angebracht, welches aus einem in Richtung der Pedal-Drehachse sich erstreckenden Stegabschnitt 25 und zwei von den Endbereichen des Stegabschnitts 25 in Fahrtrichtung frei abstehenden Gabelschenkeln 27 besteht. Die Gabelschenkel 27 des Rastelements 23 greifen zwischen zwei von dem pedalseitigen Kupplungsteil 3 entgegen der Fahrtrichtung gabelförmig frei abstehende Gabelschenkel 29, die zwischen sich eine Aussparung 31 zur Aufnahme des Rastelements 23 bilden.

Die Gabelschenkel 27 des Rastelements 23 sind in Richtung der Pedal-Drehachse 1 elastisch auslenkbar und tragen im Bereich ihrer Enden auf den zu den Gabelschenkeln 29 weisenden Seitenflächen kugelkalottenförmige Rastorgane 33, die in komplementäre Rastorgane 35 in Form konusförmiger Aussparungen in den einander zugewandten Seitenflächen der Gabelschenkel 29 eingreifen. Die Federkraft der Gabelschenkel 27 ist so groß bemessen, daß über die Rastorgane 33, 35 und die Haken-Lasche-Verbindung 19, 21 die im Fahrradbetrieb auftretenden Zugkräfte übertragen werden können. Übersteigen die Zugkräfte die Haltekraft der Rastverbindung 33, 35, so löst sich das schuhseitige Kupplungsteil 5 vom pedalseitigen Kupplungsteil 3.

Die Rastverbindung zwischen dem schuhseitigen Kupplungsteil 5 und dem pedalseitigen Kupplungsteil 3 kann nicht nur durch übermäßige Zugkräfte, sondern auch durch eine nahezu beliebige Dreh- oder Kippbewegung des Schuhs und damit des schuhseitigen Kupplungsteils 5 relativ zum pedalseitigen Kupplungsteil 3 gelöst werden. Bei einer Drehung des Kupplungsteils 5 um eine quer zur Trittfläche 15 verlaufende Hochachse, beispielsweise die Achse 37, löst sich normalerweise nur eine der beiden Rastverbindungen 33, 35 und das schuhseitige Kupplungsteil 5 schwenkt um eine durch den Kalottenmittelpunkt des Rastorgans 33 bestimmte Schwenkachse 39 (Fig. 2). Der Haken 19 ist als zur Längsmittelebene des pedalseitigen Kupplungsteil 3 symmetrischer Winkelhaken ausgebildet, dessen Winkelschenkel 41 im wesentlichen tangential zu den bei 43 angedeuteten Drehkreisen der um die Drehachsen 39 schwenkenden Lasche 21 des Kupplungsteils 5 verlaufen. Der Haken 19 behindert damit die Schwenkbewegung des Kupplungsteils 5 längs der Trittfläche 15 nicht.

Der Haken 19 und die Lasche 21 haben zueinander komplementäre, in Fahrtrichtung 17 schräg von oben nach unten verlaufende Schräbschubflächen 45, 47. Die Schrägschubflächen 45, 47 verlaufen in gleichem Winkel zur Trittfläche 15 und liegen bei geschlossener Rastverbindung aneinander an. Bei einer Kippbewegung des Kupplungsteils 5 um eine in Fahrtrichtung sich erstreckende Schuhlängsachse, wie sie in Fig. 2 bei 49 angedeutet ist, unterstützen die Schrägschubflächen 45, 47 die Lösebewegung der Rastverbindung 33, 35, indem sie das Kupplungsteil 5 entgegen der Fahrtrichtung relativ zum Kupplungsteil 3 schieben. Entsprechendes gilt für eine Kippbewegung um eine zur Pedaldrehachse 1 parallele Achse, durch die die Lasche 21 durch übermäßige Krafteinwirkung unter dem Haken 19 hervorgehoben wird. Auch in diesem Fall erzwingen die Schrägschubflächen 45, 47 eine Öffnungsbewegung der Rastverbindung.

Eine weitere, die Öffnungsbewegung unterstützende Schrägschubflächenpaarung ist durch eine in Fahrtrichtung 17 von unten schräg nach oben verlaufende Schrägschubfläche 51 zwischen den beiden Gabelschenkeln 29 des Kupplungsteils 3 einerseits und den als Schrägflächen 53 ausgebildeten freien Enden der Gabelschenkel 27 gebildet. Die Gabelschenkel 27 sind bei geschlossener Rastverbindung 33, 35 der Schrägschubfläche 51 dicht benachbart oder liegen an dieser an, so daß sie bei der Schwenkbewegung des Kupplungsteils 5 um die Drehachsen 39 zumindest in einer Drehrichtung die Lösebewegung der Rastverbindung durch Herausheben des Gabelschenkels 27 aus der Aussparung 31 unterstützen. In jedem Fall unterstützen jedoch die Schrägflächen 51, 53 die Lösebewegung und wirken einem Verhaken der Kupplungsteile 3, 5 entgegen. Die Schrägschubflächen 45, 47 und 51, 53 sorgen für ein definiertes Auslöseverhalten der Pedal- Bindung bei Kipp-und Schwenkbewegungen der Kupplungsteile 3, 5 um im wesentlichen beliebige räumliche Achsen.

Zusätzlich zu der die Gabelschenkel 29 verbindenden Schrägschubfläche 21 sind auch an den aneinander zugewandten Seiten der Gabelschenkel 29 Schrägflächen 55 angeformt, die sich zusammen mit der Schrägschubfläche 51 nach oben zur Trittfläche 15 hin trichterförmig erweitern und das Einführen der Rastorgane 33 in die Aussparungen bzw. Rastorgane 35 erleichtern. In dem Bereich zwischen der Pedal-Drehachse 1 und dem Haken 19 ist eine zum Haken 19 hin dreieckförmig sich verjüngende Öffnung 57 vorgesehen, in die beim Schließen der Pedal-Bindung das Basisteil 7 mit der Lasche 21 voraus eintaucht, bis die Lasche 21 durch eine kombinierte Schub-und Kippbewegung des Kupplungsteils 5 unter dem Haken 19 anliegt. Die Winkelform des Hakens 19 sorgt für eine Zentrierung der Lasche 21 und die Schrägflächen 51, 55 sorgen für eine Zentrierung der Rastorgane 33 relativ zu den Rastorganen 35 beim nachfolgenden Niederdrücken des in Fahrtrichtung hinten liegenden Bereichs des Kupplungsteils 5.

An den Endflächen der Gabelschenkel 29 sind zu den Schrägflächen 53 komplementäre Schrägflächen 59 angeformt, die im wesentlichen unter demselben Winkel zur Trittfläche 15 verlaufen, wie die Schrägflächen 53 der Gabelschenkel 27 und sich in Fahrtrichtung 17 schräg nach oben erstrekken. Die Schrägflächen 53, 59 verhindern, daß sich das Kupplungsteil 5 beim Aufsetzen auf das Kupplungsteil 3 mit diesem verhakt.

Um die zum Lösen der Rastverbindung 33, 35 erforderliche Zugkraftschwelle einstellen zu können, ist der Stegab schnitt 25 des Rastelements 23 im Bereich der ihm zugewandten Enden der Stegschenkel 27 über zwei Gelenke 61 mit dem Basisteil 7 verbunden. Auf der den Gabelschenkeln 27 abgewandten Seite des Stegabschnitts 25 ist an dem Basisteil 7 eine Stufenexzenterscheibe 63 um eine Drehachse 65 drehbar gelagert. Die Stufenexzenterscheibe 63 bildet einen in Stufen verstellbaren Anschlag für den zwischen den Gelenken 61 flexiblen Stegabschnitt 25. Durch Verändern der Anschlaghöhe wird der Abstand der Rastorgane 33 in Richtung der Drehachse 1 und damit die beim Schließen der Rastverbindung erzeugte Rastkraft verändert. Es versteht sich, daß anstelle der Stufenexzenterscheibe auch andere einstellbare Anschläge, beispielsweise in Form von Stellschrauben oder dergleichen, vorgesehen sein können. Auch kann der verstellbare Teil des Anschlags an dem Stegabschnitt 25 vorgesehen sein und sich an einem feststehenden Gegenanschlag des Basisteils 7 abstützen.

Im folgenden sollen Varianten der Pedal-Bindung erläutert werden. Gleichwirkende Teile sind hierbei mit den Bezugszahlen der Figuren 1 bis 5 und zur Unterscheidung mit einem Buchstaben versehen. Zur Erläuterung des Aufbaus und der Wirkungsweise wird auf die Beschreibung der Figuren 1 bis 5 Bezug genommen.

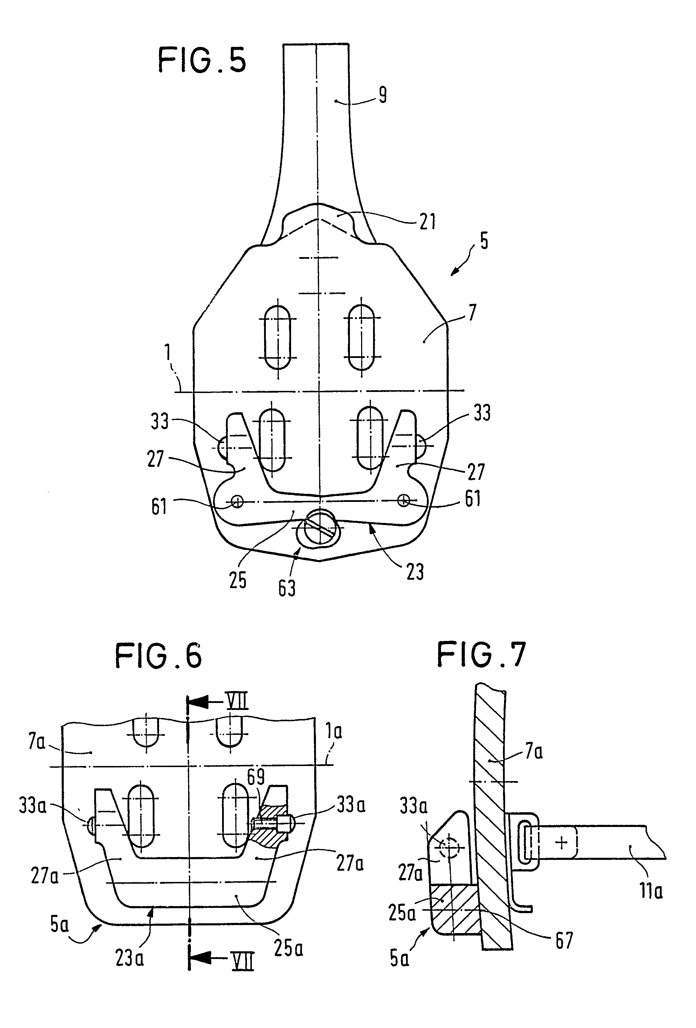

Die Figuren 6 und 7 zeigen eine Variante eines schuhseitigen Kupplungsteils 5a, welches sich von dem Kupplungsteil 5 lediglich durch die Gestaltung seines Rastelements 23a unterscheidet. Der Aufbau des pedalseitigen Kupplungsteils sowie die Führung und Verrastung des Kupplungsteils 5a an dem pedalseitigen Kupplungsteil entspricht dem Ausführungsbeispiel der Figuren 1 bis 5. Das Rastelement 23a hat wiederum im wesentlichen U-Form und weist von einem Stegabschnitt 25a in Fahrtrichtung frei abstehende Gabelschenkel 27a auf, die im Bereich Bereich ihrer freien Enden kugelkalottenförmige Rastorgane 33a tragen. Im Unterschied zum Ausführungsbeispiel der Figuren 1 bis 5 ist der Stegabschnitt 23a jedoch steif an dem Basisteil 7a befestigt. Die Befestigung kann unlösbar, beispielsweise durch Ankleben, erfolgen oder aber lösbar, beispielsweise durch bei 67 angedeutete Schrauben, um das Rastelement gegebenenfalls austauschen zu können. Die Einstellung der Rastkraft erfolgt durch Justieren der Rastorgane 33a in Richtung der Pedal-Drehachse 1a. Die Rastorgane 33a sind hierzu mit einem Gewindeschaft 69 versehen, der sie justierbar in den Gabelschenkeln 27a hält.

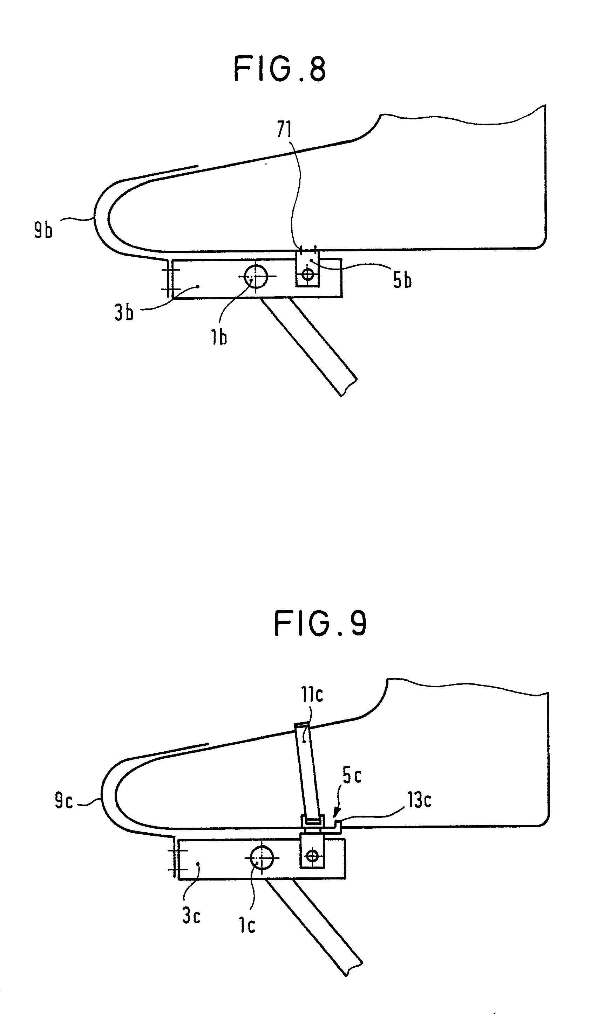

In den Ausführungsbeispielen der Figuren 1 bis 7 ist der Bügel 9 an dem schuhseitigen Kupplungsteil 5 befestigt. Figur 8 zeigt eine Variante, bei der ein die Schuhspitze umfassender Bügel 9b unmittelbar an dem um die Pedal-Drehachse 1b drehbaren pedalseitigen Kupplungsteil 3b befestigt ist. Das schuhseitige Kupplungsteil 5b, welches zumindest ein Rastelement, ähnlich dem Rastelement 23 bzw. 23a umfaßt, ist durch Verbindungselemente 71 direkt am Schuh befestigt, beispielsweise angeschraubt, angenietet, angeklebt oder angeschweißt.

Figur 9b zeigt eine Variante, bei der ein Bügel 9c wiederum unmittelbar an dem um die Pedalachse 1c drehbaren pedalseitigen Kupplungsteil 3c befestigt ist, während das schuhseitige Kupplungsteil 5c ähnlich Figur 1 einen Riemen 11c und einen Raststeg 13c umfaßt. Das schuhseitige Kupplungsteil 5c umfaßt zumindest die Elemente 7 und 23 bzw. 7a und 23a der Ausführungsbeispiele der Figuren 1 bis 7. Das schuhseitige Kupplungsteil 5c wird in dieser Variante ausschließlich durch den Riemen 11c am Schuh gehalten. Das pedalseitige Kupplungsteil 3c kann ebenso wie das Kupplungsteil 3b auch ohne das schuhseitige Kupplungsteil 5c bzw. 5b benutzt werden.

Gegebenenfalls können zusätzliche Pedaladapter vorgesehen sein, um die pedalseitigen Kupplungsteile trittsicherer zu gestalten.

**Ansprüche**

1. Pedal-Bindung zum lösbaren Kuppeln eines Schuhs mit einem um eine Pedal-Drehachse drehbaren Pedal eines Fahrrads,
mit einem eine Trittfläche (15) bildenden, pedalseitigen Kupplungsteil (3) und einem auf die Trittfläche (15) aufsetzbaren, schuhseitigen Kupplungsteil (5),
wobei ein erstes (3) der beiden Kupplungsteile (3, 5) eine quer zur Trittfläche (15) offene Aussparung (31) aufweist, die an zwei in Richtung der Pedal-Drehachse (1) sich gegenüberliegenden Seitenflächen mit Rastorganen (35) versehen ist und wobei ein zweites (5) der beiden Kupplungsteile (3, 5) ein in die Aussparung (31) einsetzbares Riegelteil (23) aufweist, welches an den Rastorganen (35) des ersten Kupplungsteils (3) elastisch verrastbare, komplementäre Rastorgane (33) trägt,
**dadurch gekennzeichnet,** daß eines (3) der beiden Kupplungsteile (3, 5) gabelförmig quer zur Pedal-Drehachse (1) frei abstehende, in Richtung der Pedalachse (1) elastisch auslenkbare Gabelschenkel (27) aufweist, die im Bereich ihrer freien Enden die Rastorgane (33) tragen.

2. Pedal-Bindung nach Anspruch 1, **dadurch gekennzeichnet,** daß beide Kupplungsteile (3, 5) gabelförmig quer zur Pedalachse (1) frei abstehende Gabelschenkel (27, 29) aufweisen, wobei die Gabelschenkel (29) des ersten Kupplungsteils (3) den Gabelschenkeln (27) des zweiten Kupplungsteils (5) entgegengerichtet abstehen und die Aussparung (31) zwischen sich begrenzen sowie die Gabelschenkel (27) des zweiten Kupplungsteils (5) zwischen sich aufnehmen.

3. Pedal-Bindung nach Anspruch 2, **dadurch gekennzeichnet,** daß das erste Kupplungsteil (3) pedalseitig angeordnet ist und entgegen der Fahrtrichtung (17) abstehende Gabelschenkel (29) hat.

4. Pedal-Bindung nach einem der Ansprüche 1 bis 3, **dadurch gekennzeichnet,** daß an den beiden Kupplungsteilen (3, 5) bei miteinander verrasteten Rastorganen (33, 35) einander benachbarte Schrägschubflächen (45, 47; 51, 53) angeformt sind, die bei Relativdrehung der beiden Kupplungsteile (3, 5) um eine quer zur Pedal-Drehachse verlaufende Relativdrehachse die Verrastung der Rastorgane (33, 35) lösen.

5. Pedal-Bindung nach Anspruch 4, **dadurch gekennzeichnet,** daß die Rastorgane (33, 35) in Fahrtrichtung (17) hinter der Pedal-Drehachse (1) angeordnet sind, daß das pedalseitige Kupplungsteil (3) in Fahrtrichtung (17) vor der Pedaldrehachse (1) einen entgegen der Fahrtrichtung (17) offenen Haken (19) trägt, der eine zum Haken (19) abstehende Lasche (21) des schuhseitigen Kupplungsteils (5) übergreift und daß die Schrägschubflächen (45, 47) an dem Haken (19) und der Lasche (21) angeformt sind und die Kupplungsteile (3, 5) bei deren Relativdrehung relativ zueinander in Fahrtrichtung (17) verschieben.

6. Pedal-Bindung nach Anspruch 4 oder 5, **dadurch gekennzeichnet**, daß das pedalseitige Kupplungsteil (3) gabelförmig entgegen der Fahrtrichtung (17) quer zur Pedal-Drehachse (1) frei abstehende Gabelschenkel (29) aufweist, die zwischen sich in Fahrtrichtung quer zur Pedaldrehachse (1) frei abstehende Gabelschenkel (27) des schuhseitigen Kupplungsteils (5) aufnehmen, wobei die zueinander komplementären Rastorgane (33, 35) zwischen benachbarten Gabelschenkeln (27, 29) angeordnet sind und daß die Schrägschubflächen (51, 53) zwischen den Gabelschenkeln (29) des pedalseitigen Kupplungsteils (3) und an den Enden der Gabelschenkel (27) des schuhseitigen Kupplungsteils (5) vorgesehen sind.

7. Pedal-Bindung nach einem der Ansprüche 1 bis 6, **dadurch gekennzeichnet**, daß die Rastorgane (33, 35) in Fahrtrichtung hinter der Pedal-Drehachse (1) angeordnet sind, daß das pedalseitige Kupplungsteil (3) in Fahrtrichtung vor der Pedal-Drehachse (1) einen zu den Rastorganen (33, 35) hin offenen Haken (19) trägt, der eine zum Haken (19) abstehende Lasche (21) des schuhseitigen Kupplungsteils (5) von in Fahrtrichtung vorn her übergreift und daß der Haken (19) in Richtung auf die Trittfläche (15) gesehen Winkelform hat, deren Winkelschenkel (41) im wesentlichen tangential zu den Drehkreisen (43) der Lasche (21) um von den Rastorganen (33, 35) definierte Schwenkachsen (39) verlaufen.

8. Pedal-Bindung nach Anspruch 7, **dadurch gekennzeichnet**, daß das pedalseitige Kupplungsteil (3) im Bereich des Haken (19) eine zur Aufnahme der Lasche (21) geeignete Öffnung (57) aufweist.

9. Pedal-Bindung nach einem der Ansprüche 1 bis 8, **dadurch gekennzeichnet**, daß die Aussparung (31) des ersten Kupplungsteils (3) im wesentlichen entlang ihrer gesamten Berandung zum zweiten Kupplungsteil (5) hin die Aussparung (31) erweiternde Einführschrägflächen (51, 55) aufweist.

10. Pedal-Bindung nach einem der Ansprüche 1 bis 9, **dadurch gekennzeichnet**, daß das pedalseitige Kupplungsteil (3) gabelförmig entgegen der Fahrtrichtung frei abstehende Gabelschenkel (29) aufweist, die zwischen sich in Fahrtrichtung quer zur Pedal-Drehachse (1) frei abstehende Gabelschenkel (27) des schuhseitigen Kupplungsteils (5) aufnehmen, wobei die zueinander komplementären Rastorgane (33, 35) zwischen benachbarten Gabelschenkeln (27, 29) angeordnet sind und daß an den freien Enden der Gabelschenkel (27, 29) der Kupplungsteile (3, 5) zueinander komplementäre, in Fahrtrichtung schräg von unten nach oben verlaufende Schrägflächen (53, 59) angeformt sind.

11. Pedal-Bindung nach einem der Ansprüche 1 bis 10, **dadurch gekennzeichnet**, daß die beiden in Richtung der Pedal-Drehachse (1) elastisch auslenkbaren, im Bereich ihrer freien Enden die Rastorgane (33) tragenden Gabelschenkel (27) einteilig an einem Stegabschnitt (25) eines im wesentlichen U-förmigen Rastelements (23) angeformt sind, welches im Bereich des Stegabschnitts (25) an einem Basisteil (7) des ersten Kupplungsteils (5) gehalten ist.

12. Pedal-Bindung nach Anspruch 11, **dadurch gekennzeichnet**, daß der Stegabschnitt (25) im Bereich der zu ihm benachbarten Enden der Gabelschenkel (27) mittels zweier Gelenke (61) an dem Basisteil (7) gelagert ist und daß zwischen den beiden Gelenken (61) ein in Richtung der Gabelschenkel (27) verstellbarer Anschlag (63) vorgesehen ist, über den der Stegabschnitt (25) an dem Basisteil (7) abgestützt ist.

13. Pedal-Bindung nach Anspruch 12, **dadurch gekennzeichnet**, daß der Anschlag als drehbar an dem Basisteil (7) gelagerte Stufenexzenterscheibe (63) ausgebildet ist.

# FIG.1

FIG.3

FIG.2

FIG.4

EP 0 349 986 A2

# FIG.5

# FIG.6

# FIG.7

# FIG.8

71

9b

3b

1b

5b

# FIG.9

11c

9c

5c

13c

3c

1c